# EUROPÄISCHE PATENTSCHRIFT

(11) **EP 1 588 798 B1**
(45) Veröffentlichungstag und Bekanntmachung des Hinweises auf die Patenterteilung: **10.01.2007**
(21) Anmeldenummer: 05007492.1
(22) Anmeldetag: 06.04.2005
(51) Int. Cl.: B23Q 11/10, F16N 7/32

(54) **Vorrichtung und Verfahren zur Bereitstellung eines feinen Ölnebels**
Device and process for providing an oil mist
Dispositif et méthode pour fournir un brouillard d'huile

(30) Priorität: 20.04.2004 DE 102004019686; 21.03.2005 DE 102005013458
(43) Veröffentlichungstag der Anmeldung: 26.10.2005
(73) Patentinhaber: Acculube Manufacturing GmbH Schmiermittel und -geräte, 75433 Maulbronn (DE)
(72) Erfinder: Grözinger, Michael, 75433 Maulbronn (DE)
(74) Vertreter: Ostriga, Sonnet, Wirths & Roche

(56) Entgegenhaltungen:
- US-A- 3 775 025
- US-A- 4 205 708
- US-A- 5 042 618
- US-A- 5 775 881

## Beschreibung

Zunächst betrifft die Erfindung eine Vorrichtung zur Bereitstellung eines feinen Ölnebels, insbesondere zur Einspeisung in Schmierstoffkanäle von Werkzeugen einer CNC-Werkzeugmaschine, mit Pumpen zur Ölförderung und zumindest einer Druckluftleitung, über die Luft gefördert wird, sowie wenigstens einem ÖI-Luftgemischerzeuger, der Öl und Luft zu einem feinen Ölnebel (Aerosol) aufbereitet, und einem Vorratsbehälter zuführt, aus dem der Ölnebel über eine Zuleitung dem Werkzeug zugeführt wird.

Aus dem druckschriftlich nicht belegbaren Stand der Technik ist die vorgenannte Vorrichtung auch als Minimalmengen-Schmiersystem bekannt. Sie weist wenigstens einen Öl-Luftgemischerzeuger auf, der des Öl-Luft-Gemisch bereitstellt. Dieses wird unter Druck den Werkzeugen einer CNC-Werkzeugmaschine zur Werkzeugschmierung zugeführt.

Den nächstkommenden Stand der Technik stellt ein offenkundig vorbenutztes "Miniboostersystem" der Anmelderin dar. Es weist drei ÖI-Luftgemischerzeuger mit jeweils einer zugehörigen Pumpe auf, die je nach eingesetztem Werkzeug beziehungsweise dem zum jeweiligen Werkzeug gehörenden Querschnitt der Innenschmierkanäle einzeln zugeschaltet werden können.

Werkzeuge mit großen Durchmessern weisen üblicherweise auch große Schmierkanalquerschnitte auf, so dass zur Öl-Luftgemischerzeugung alle drei Pumpen betrieben werden müssen, um eine ausreichende Schmiermittelmenge sowie einen entsprechenden Förderdruck gewährleisten zu können. Bei Werkzeugen mit kleineren Durchmessern, die entsprechend geringere Schmierkanal-Querschnitte aufweisen, werden nur eine oder maximal zwei Pumpen benötigt, um einen ausreichenden Schmierfilm bereitzustellen.

Im Stand der Technik ist es üblich, die Schmierleistung in Abhängigkeit von den verwendeten Werkzeugen manuell über sogenannte M-Funktionen zu programmieren. M-Funktionen sind standardisierte Maschinen- oder Schaltbefehle zum Betrieb einer CNC-Werkzeugmaschine. Für jedes unterschiedliche Werkzeug müssen im Programm der CNC-Maschine unterschiedlichen M-Funktionen hinterlegt werden. Es muss deshalb eine große Vielzahl von Funktionen programmiert werden, um eine große Werkzeugvielfalt abdecken zu können.

Um einen reibungslosen Produktionsablauf zu gewährleisten, kommt der Programmierung eine hohe Bedeutung zu. Ist beispielsweise der Förderdruck durch den Betrieb zu vieler Pumpen für ein Werkzeug mit geringem Durchmesser und kleinem Querschnitt der Schmierkanäle zu hoch, baut sich bedingt durch den kleinen Schmierkanal-Querlschnitt ein Gegendruck auf, der so groß werden kann, dass trotz genügender Vorratsmenge nicht mehr ausreichend Schmiermittel zum Werkzeug gelangen kann. Im umgekehrten Fall, bei großen Werkzeugen, ist die Situation ähnlich, wenn nicht eine ausreichende Zahl von Pumpen aktiv ist. Eine zu geringe Menge von Schmiermittel am Werkzeug führt in jedem Falle zu erhöhtem Werkzeugverschleiß und im Zweifel zum Ausfall des Werkzeuges.

Auch wenn sich das vorbenutzte Miniboostersystem in der Praxis bewährt hat, wird es noch als verbesserungsfähig angesehen, da es im Betrieb mitunter zu Problemen durch Fehlbedienung, sprich Fehlprogrammierung der M-Funktionen, kommt. Der Zerspanungsprozess kann bei korrekter Programmierung im Grunde genommen vollautomatisch ablaufen, zumal die Maschinen auch in der Lage sind, die jeweiligen Werkzeuge automatisch zu wechseln. Die Beeinträchtigung des Produktionsprozesses durch Fehlprogrammierungen wird daher als ausgesprochen hinderlich angesehen.

Aufgabe der Erfindung ist es daher zunächst, eine neue Vorrichtung zur minimalen Förderung von Schmiermitteln zu schaffen, die unter Beibehaltung üblicher Werkzeuge und technischer Einrichtungen eine ausreichende Versorgung von Werkzeugen mit unterschiedlichen und stark abweichenden Schmierkanal-Querschnitten mit Schmiermitteln auch ohne aufwändige manuelle Programmierung gewährleistet.

Die Aufgabe der Erfindung wird durch die Merkmale des Anspruches 1 gelöst, insbesondere durch die Merkmale des Kennzeichenteils, wonach die Vorrichtung einen den Druck des Aerosols im Vorratsbehälter (Vorratsdruck) messenden Drucksensor und eine Steuereinrichtung aufweist, die nach dem Einschalten der Vorrichtung Luftzufuhr und je mindestens eine Aerosolpumpe und eine Überfettungspumpe zur ÖI-Luftgemischerzeugung startet und dass die Steuervorrichtung ferner
- die Überfettungspumpe bei Erreichen eines vorbestimmten ersten Vorratsdruckwertes P₂ stoppt,
- die mindestens eine Aerosolpumpe bei Überschreiten eines vorbestimmten, maximal zulässigen zweiten Vorratsdruckwertes P₄ stoppt,
- die mindestens eine Aerosolpumpe bei Unterschreiten eines vorbestimmten dritten Vorratsdruckwertes P₃ erneut startet, und
- die Überfettungspumpe bei Unterschreiten eines vorbestimmten vierten Vorratsdruckwertes P₁ erneut startet,
wobei P₁ < P₂ < P₃ < P₄ ist.

Ein weiteres Merkmal der Erfindung besteht darin, dass die Vorrichtung über eine Steuerleitung mittels des standardisierten Maschinenbefehls M08 ("Kühlschmiermittel EIN") eingeschaltet und mittels des standardisierten Maschinenbefehls M09 ("Kühlschmiermittel AUS") ausgeschaltet wird.

Hinsichtlich der Druckwerte ist erfindungsgemäß vorgesehen, dass bei einer Druckluft- bzw. Aerosoleinspeisung mit etwa 6 bar in den Vorratsbehälter die Vorratsdruckwerte P₁ bei etwa 1,6 bar, P₂ bei etwa 1,8 bar, P₃ bei etwa 3,8 bar und P₄ bei etwa 4,1 bar liegen. Es handelt sich hierbei um ca.-Werte, die im Rahmen der erfindungsgemäßen Grundlehre auch jeweils geringfügig unter- oder überschritten werden können. Auch Sondereinstellungen für spezielle Anwendungsfälle kommen durchaus in Betracht.

Die Erfindung ermöglicht es auf vorteilhafte Weise, durch die lediglich vom Vorratsdruck abhängige automatische Steuerung - also durch eine reine Drucksteuerung, nicht über eine Mengensteuerung von Druckluft und/oder Öl - von Pumpen und Lufteinspeisung eine ausreichende Öl-Luftgemischvorratsmenge in einem definierten Druckbereich vorzuhalten. Wenn durch Abnahme von Öl-Luftgemisch über die Zuleitung zum Werkzeug der Vorratsdruck sinkt, wird bei Unterschreiten des Druckwertes P3 durch Ölförderung und Druckluftzufuhr durch die Aerosolerzeuger der Vorratsbehälter wiederum mit feinem Ölnebel aufgefüllt.

Abgesehen davon, dass für die üblicherweise verwendeten Werkzeuge auf diese Art und Weise eine ausreichende Menge des Öl-Luftgemisches im Vorratsbehälter vorhanden ist, ist ein maximaler Förderdruck durch den in der Steuereinrichtung definierten relativ hohen Abschaltdruck P4 sichergestellt.

Im Unterschied zum Stand der Technik, der durch das einfache Zuschalten von Pumpen in Abhängigkeit von den verwendeten Werkzeugen den Förderdruck unkontrolliert erhöht, ist durch die Vorgabe eines maximalen Förderdruckes bei Verwendung kleiner Werkzeuge gewährleistet, dass die Zuführung von Schmierstoff zum Werkzeug nicht durch einen sich zu hoch aufbauenden Gegendruck unterbrochen werden kann.

Da weiterhin die Öl-Luftgemischerzeugung ausschließlich in Abhängigkeit von dem im Vorratsbehälter anstehenden Druck (Vorratsdruck) durch die Steuereinrichtung automatisch ausgelöst einsetzt, sind Fehlprogrammierungen, wie sie im Stand der Technik vorkommen, ausgeschlossen.

Dadurch, dass die Vorrichtung über eine Steuerleitung mittels des standardisierten Maschinenbefehls M08 ("Kühlschmiermittel EIN") eingeschaltet und mittels des standardisierten Maschinenbefehls M09 ("Kühlschmiermittel AUS") ausgeschaltet wird, sind besondere Programmierungen bestimmter Druckwerte oder Ein- oder Ausschaltzustände in der numerischen Steuerung bei der erfindungsgemäßen Vorrichtung nicht erforderlich. Die Vorrichtung arbeitet höchst wirkungsvoll, zuverlässig und vollautomatisch zwischen dem Einschaltbefehl M08 ("Kühlschmiermittel EIN") und dem Ausschaltbefehl M09 ("Kühlschmiermittel AUS"), die sie von der Werkzeugmaschinensteuerung erhält.

Die Zuschaltung der Überfettungspumpe ist insbesondere bei Werkzeugen mit großquerschnittigen Kühlschmiermittelkanälen von großer Bedeutung. Wenn nämlich Werkzeuge mit großen Kühlschmiermittelkanalquerschnitten eingesetzt werden, baut sich im Vorratsbehälter durch die Abgabe großer Öl-Luftgemischmengen kein ausreichender Druck mehr auf. Durch die automatische Einspeisung von Zusatzluft und die direkte Einspeisung von Öl in die Zuleitung zum Werkzeug durch die Steuereinrichtung ist deshalb auf vorteilhafte Weise gewährleistet, dass auch bei Einsatz von Werkzeugen mit großen Schmierstoffkanalquerschnitten ausreichende Mengen Schmierstoff und Luft bereitgestellt werden.

Bei einer des weiteren bevorzugten Ausführungsform sind zur Öl-Luftgemischerzeugung zwei parallel betriebene ÖI-Luftgemischerzeuger vorgesehen, denen jeweils eine eigene Ölförderpumpe zugeordnet ist. So kann die erfindungsgemäße Vorrichtung auf vorteilhafte Weise aus bekannten und vor allen Dingen bewährten Elementen des Standes der Technik aufgebaut werden. Neben einer kostengünstigen Produktion ist so auch eine große Zuverlässigkeit des Minimalmengen-Schmiersystems gewährleistet. Allerdings ist es auch möglich, eine einzige statt der vorgesehenen zwei Aerosolpumpen vorzusehen.

Eine besonders bevorzugte Ausführungsform kennzeichnet sich dadurch, dass die Überfettungspumpe über eine Leitung direkt mit der Zuleitung zum Werkzeug verbunden ist, und dass eine zusätzliche Druckluftleitung zur Förderung von Zusatzluft mit wenigstens einem Öl-Luftgemischerzeuger verbunden ist, wobei Zusatzlufteinspeisung und Überfettungspumpe bei Erreichen des dritten Vorratsdruckwertes P₂ durch die Steuereinrichtung abgeschaltet werden.

Eine weitere vorteilhafte Ausführungsform der Vorrichtung zeichnet sich dadurch aus, dass die Aerosol-Pumpen und die Überfettungspumpe als Pneumatikpumpen ausgebildet sind, die mit den jeweiligen Druckluftleitungen verbunden, durch das Einspeisen von Luft bzw. Zusatzluft betrieben werden. So wird auf vorteilhafte Weise die zum Betrieb der Vorrichtung notwendige Luft zum Antrieb der Pumpen genutzt. Es kann auf zusätzliche Energieleitungen (wie z.B. Stromkabel) verzichtet werden und darüber hinaus zeichnen sich die Pumpen durch eine einfache Bauart aus. Auf besonders vorteilhafte Weise wird der Steuerungsaufwand der Vorrichtung reduziert, da zum Ein- bzw. Abschalten der Pumpen die Steuerung lediglich die jeweilige Lufteinspeisung zu starten bzw. zu beenden braucht.

Den Pumpen und der Überfettungspumpe können Frequenzgeneratoren zur Leistungsregelung vorgeschaltet sein.

Die Erfindung betrifft darüber hinaus ein Verfahren zur Bereitstellung eines feinen Ölnebels, insbesondere zur Einspeisung in Schmierstoffkanäle von Werkzeugen einer CNC-Werkzeugmaschine, bei dem Öl-Luftgemischerzeugern Druckluft und Öl über Pumpen zur Erzeugung eines feinen Ölnebels (Aerosols) zugeführt wird, wobei die Pumpen und die Druckluftzufuhr in Abhängigkeit von den verwendeten Werkzeugen zugeschaltet werden.

Ein Verfahren zur Lösung der erfindungsgemäßen Probleme ist mit den Merkmalen des unabhängigen Anspruches 8 angegeben und insbesondere durch die Merkmale des Kennzeichenteils charakterisiert, wonach der Aerosoldruck (Vorratsdruck) erfasst wird und die Öl-Luftgemischerzeuger nach Einschalten der Vorrichtung in Abhängigkeit allein von voreingestellten Vorratsdruckwerten angesteuert werden.

Der standardisierte Maschinenbefehl M08 ("Kühlschmiermittel EIN") schaltet die Vorrichtung ein und der standardisierte Maschinenbefehl M09 ("Kühlschmiermittel AUS") schaltet die Vorrichtung aus.

Im Regelbetrieb arbeiten die für die Aerosolerzeugung zuständigen Pumpen innerhalb eines Vorratsdruckbereichs zwischen P₀ = 0 bar und P₄ < 6 bar kontinuierlich. Bei Unterschreiten eines vorbestimmten Vorratsdruckwertes P₁ schaltet die Überfettungspumpe wieder zu und Zusatzluft wird in wenigstens einen der ÖI-Luftgemischerzeuger eingespeist..

Bei dem erfindungsgemäßen Verfahren liegen bei einer Druckluft- bzw. Aerosoleinspeisung mit etwa 6 bar in den Vorratsbehälter die Vorratsdruckwerte P₁ bei etwa 1,6 bar, P₂ bei etwa 1,8 bar, P₃ bei etwa 3,8 bar und P₄ bei etwa 4,1 bar. Hier handelt es sich und ca.-Werte, die auch zumindest geringfügig unter- oder überschritten oder auch im Hinblick auf spezielle Belange festgelegt werden können

Das erfindungsgemäße Verfahren ermöglicht es, abgesehen von der generellen Programmierung "Kühlschmiermittel EIN", "Kühlschmiermittel AUS", auf gesonderte, werkzeuggebundene Zu- und Abschaltbefehle für die einzelnen Pumpen zu verzichten. Ausgehend von der Tatsache, dass durch die vom Werkzeugdurchmesser abhängigen Schmiermittelkanalquerschnitte unterschiedliche Mengen des verwendeten Kühlschmierstoffes in das Werkzeug gelangen und sich dadurch der Vorratsdruck vermindert, gewährleistet die Ansteuerung der ÖI-Luftgemischerzeuger über einen voreingestellten Ein- und Ausschaltdruck die Bereitstellung einer ausreichenden Menge feinen Ölnebels unabhängig von verwendeten Werkzeuggrößen.

Zur besseren Darstellung der Erfindung wird auf die nachfolgende Zeichnungsbeschreibung verwiesen.

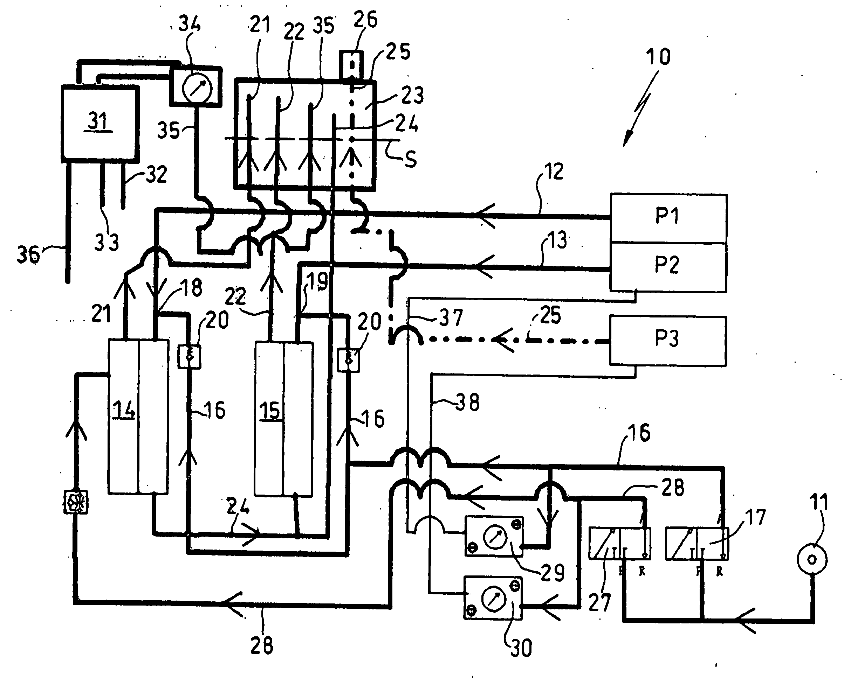

In der Zeichnung ist eine Vorrichtung zur Zuführung minimaler Schmiermittelmengen zum Werkzeugkopf einer CNC-Werkzeugmaschine insgesamt mit der Bezugsziffer 10 gekennzeichnet. Zum besseren Verständnis weisen die in der Zeichnung dargestellten und in ihrer Funktion im Folgenden beschriebenen Leitungen Pfeile auf, die die Strömungsrichtungen verdeutlichen sollen.

Die Vorrichtung 10 weist zunächst einen Druckluftanschluss 11 auf, der die Vorrichtung mit der benötigten Förderluft vorzugsweise mit einem Standard-Druck von 6 bar versorgt. Drei Pumpen P1, P2, P3 dienen der Ölförderung, wobei das Öl als Schmiermittel dient. Zur besseren Unterscheidung werden die Pumpen P1 und P2 auch als "Aerosolpumpen" und die Pumpe P3 als "Überfettungspumpe" bezeichnet, wenngleich sie alle den Zweck haben, Aerosol zu erzeugen.

Die Pumpen P1, P2 und P3 sind in diesem Ausführungsbeispiel als Pneumatikpumpen ausgebildet. Die Pumpe P1 ist über die Leitung 12 mit dem Öl-Luftgemischerzeuger 14 und die Pumpe P2 über die Leitung 13 mit dem Öl-Luftgemischerzeuger 15 verbunden. Beide Öl-Luftgemischerzeuger weisen im Mündungsbereich der Leitungen 12 beziehungsweise 13 eine hier nicht dargestellte Zerstäuberdüse auf. Dieser Zerstäuberdüse, in Ölströmungsrichtung vorgeordnet, wird die Förderluft über die Leitung 16 zugeführt. Dabei lässt sich der vom Druckluftanschluss 11 ausgehende Luftstrom durch ein Ventil 17 steuern. Um ein Einströmen des durch die Pumpen P1 und P2 unter Förderdruck stehenden Öles in die Luftleitung 16 zu verhindern, weist diese den Lufteinspeisepunkten 18 und 19 in Luftströmungsrichtung vorgeordnet Rückschlagventile 20 auf.

Abgehend von den Öl-Luftgemischerzeugern 14 und 15 verlaufen Öl-Luftgemischförderieitungen 21 und 22 sowie eine Leitung zur Ölrückführung 24 zu einem Öl-/Ölnebel-Vorratsbehälter 23. Dieser weist einen gewissen Flüssigölspiegel S auf, wobei der Raum oberhalb des Flüssigölspiegels S im Betrieb mit Ölnebel gefüllt ist.

Um auch bei Werkzeugen mit großem Durchmesser eine ausreichende Ölversorgung sicher zu stellen, weist die Vorrichtung eine sog. Überfettungspumpe P3 auf, die über eine Kapillarleitung 25 unter Umgehung des Vorratsbehälters 23 direkt mit einer Zuleitung 26 zum nicht dargestellten Werkzeugkopf einer CNC-Werkzeugmaschine verbunden ist. Um eine ausreichende Ölversorgung von Werkzeugen mit großem Schmiermittelkanal-Querschnitt bereitzustellen, weist die Vorrichtung 10 eine über ein Ventil 27 separat steuerbare, zusätzliche Lufteinspeiseleitung 28 auf, die im vorliegenden Fall zusätzliche Förderluft dem Öl-Lufigemischerzeuger 14 zuleitet. Die Leitung 28 kann jedoch genauso gut in den Öl-Lufigemischerzeuger 15 oder auch in beide Öl-Lufigemischerzeuger 14 und 15 münden.

Um die Förderleistung der Pumpen P1 bis P3 regulieren zu können, weist die Vorrichtung zwei Frequenzgeneratoren 29 und 30 auf. Der Frequenzgenerator 29 reguliert die im vorliegenden Beispiel parallel betriebenen Pumpen P1 und P2, mit denen er über die Luftleitung 37 verbunden ist. Der Frequenzgenerator 30 reguliert die Förderleistung der Pumpe P3, mit der er über die Luftleitung 38 verbunden ist. Im vorliegenden Ausführungsbeispiel sind die Frequenzgeneratoren mit den Luftleitungen 16 beziehungsweise 28 gekoppelt, so dass die zum Betrieb der Pumpen benötigte Luft bei geöffneten Ventilen 17 beziehungsweise 27 aus den Druckluftleitungen 16 beziehungsweise 28 entnommen wird.

Gesteuert wird die Vorrichtung über eine Steuereinrichtung 31, die in nicht dargestellter Weise über zwei Schaltleitungen 32 und 33 die Ventile 17 und 27 zur Einspeisung von Förderluft je nach Bedarf öffnen kann. Um den Bedarf an zusätzlicher Förderluft und zusätzlichem Öl-Luftgemisch feststellen zu können, weist die Steuereinrichtung 31 einen Drucksensor 34 auf, der - über eine Leitung 35 mit dem Vorratsbehälter 23 verbunden - den in der Vorrichtung 10 anstehenden Druck, den sog. Vorratsdruck, misst. Über eine Steuerleitung 36 wird die Vorrichtung 10 über den Befehl "Kühlschmiermittel EIN/AUS" einbeziehungsweise ausgeschaltet.

Im Folgenden wird die Funktion der Vorrichtung 10 erläutert:

Über den Maschinenbefehl "Kühlschmiermittel EIN" wird die Vorrichtung 10 in Betrieb gesetzt. Die Steuereinrichtung 31 misst den Vorratsdruck über den Drucksensor 34 und öffnet das Ventil 17, sofern der in der Vorrichtung 10 befindliche Druck (Vorratsdruck) unterhalb eines werkseitig voreingestellten kritischen Wertes (beispielsweise P₃ = 3,8 bar) liegt. Mit einströmender Förderluft von ca. 6 bar erhalten die Pumpen P1 und P2 über die Luftleitung 37 den zum Betrieb notwendigen Luftstrom, wobei der Frequenzgenerator 29 die Förderleistung der Pumpen reguliert. Luft und das von den Pumpen P1 und P2 geförderte Öl gelangt durch die nicht dargestellten Zerstäuberdüsen in die Öl-Luftgemischerzeuger 14 und 15, wodurch das Öl-Luftgemisch mit feinsten Ölpartikeln (vornehmlich im mikroskopischen Bereich) bereitgestellt wird. Größere Ölpartikel setzen sich an den Innenwandoberflächen der Öl-Luftgemischerzeuger 14, 15 ab und gelangen über die ÖI-Rückführung 24 in den Vorratsbehälter 23 von wo aus sie dem Ölkreislauf wieder zugeführt werden. Einen beispielhaften Aufbau für die Öl-Luftgemischerzeuger 14 und 15 zeigt die DE 298 11 504 U1 der Anmelderin.

Das Öl-Luftgemisch gelangt über die Öl-Luftgemischleitungen 21 und 22 in den Öl- und Ölnebelvorratsbehälter 23 und von dort aus in die Zuleitung 26 zum nicht dargestellten Werkzeug. Dieser Prozess wird solange fortgeführt, bis ein ebenfalls vom Werk voreingestellter Abschaltdruck (beispielsweise P4 = 4,1 bar) erreicht wird.

Unterhalb eines für die Pumpe P3 werkseitig eingestellten Abschaltdruckes von beispielsweise P₃ = 2,1 bar gelangt für einen schnellen Druckaufbau zusätzlich Förderluft über das durch die Steuerung im Bedarfsfall geöffnete Ventil 27 und die Leitung 28 in den Öl-Luftgemischerzeuger 14 und von dort aus über die ÖI-Luftgemischleitung 21 ebenfalls in den Öl- und Ölnebelvorratsbehälter 23. Wird zusätzliche Förderluft eingespeist, erhält auch die Pumpe P3 über die Luftleitung 38 den zum Betrieb notwendigen Luftstrom, der über den Frequenzgenerator 30 reguliert werden kann. Das von der Pumpe P3 geförderte Öl gelangt über die Kapillarleitung 25 unter Umgehung des Öl- und Ölnebelvorratsbehälters 23 direkt in die Leitung 26 und zum Werkzeugkopf. So ist zunächst in der kritischen Startphase der Schmiermittelzuführung gewährleistet, dass sofort eine ausreichende Ölmenge, ein ausreichender Förderdruck und eine ausreichende Luftmenge zur Verfügung stehen, um beim Beginn des Zerspanungsprozesses die Schmierung des Werkzeuges zu gewährleisten.

Im Regelbetrieb wird der im Vorratsbehälter 23 anstehende Druck durch die Steuereinrichtung 31 im werkseitig eingestellten Bereich (hier: zwischen P₀ = 0 bar und P₄ = 4,1 bar) aufrechterhalten. Für den Einsatz von Werkzeugen mit kleinen und mittleren Durchmessern bis etwa 12 mm reicht der von den Pumpen P1 und P2 sowie die Luftzuführung über die Leitung 16 bereitgestellte Ölnebelvorrat aus. Der Problematik einer zu geringen Schmiermittelversorgung kleiner Werkzeuge (bis etwa 8 mm Durchmesser), wird durch die automatische Druckregelung im Vorratsbehälter 23 vorgebeugt. Durch den Betrieb der Vorrichtung 10 im Druckbereich zwischen P₃ = 3,8 bar und P₄ = 4,1 bar ist gewährleistet, dass der aus dem geringen Schmiermittelkanal-Querschnitt resultierende Gegendruck nicht über einen kritischen Wert steigen kann. Von daher werden auch kleine Werkzeuge ohne eine im Stand der Technik notwendige Sonderprogrammierung mit ausreichend Schmierstoff versorgt.

Auch für den Betrieb mittelgroßer Werkzeuge zwischen 8 und 12 mm Durchmesser reicht die von den Pumpen P1 und P2 bereitgestellte Öl-Luftgemischmenge sowie die über die Leitung 16 zugeleitete Förderluft aus, um eine ausreichende Schmierung sicher zu gewährleisten. Es ist von daher ersichtlich, dass die erfindungsgemäße Vorrichtung 10 mittels der zwei Öl-Luftgemischerzeuger 14 und 15 sowie den parallel betriebenen Pumpen P1 und P2 wesentlich verbessert.

Werden zur Zerspanung größere Werkzeuge (12 mm bis 63 mm Durchmesser) eingesetzt, kommt es aufgrund der größeren Schmiermittelkanal-Querschnitte im Vorratsbehälter 23 zu einem größeren Druckabfall, da eine größere ÖI-Luftgemischmenge gefördert wird. Bis herunter zu einem Vorratsdruck von etwa P₂ = 1,8 bar reicht dennoch die ÖI-Luftgemischproduktion der Pumpen P1 und P2.

Unterhalb dieses Schwellenwertes öffnet die Steuereinrichtung 31 das Ventil 27 und erhöht so den Förderluftstrom. Zusätzlich wird die Pumpe P3 in Betrieb genommen, welche über die Kapillarleitung 25 Öl direkt in die zur Werkzeugspindel führende Leitung 26 fördert und so den ebenfalls über die Förderleitung 26 zum Werkzeugkopf gelangenden Öl-Luftgemischstrom überfettet. Somit ist auch bei Werkzeugen mit großem Schmiermittelkanal-Querschnitt eine ausreichende Schmierung gewährleistet, ohne dass ein separater Eingriff manueller Art oder durch Programmierung einer zusätzlichen M-Funktion erfolgen muss.

Tatsächlich könnte auch durch beispielsweise einen dritten oder sogar vierten Öl-Luftgemischerzeuger eine ausreichende Menge des Schmiermittels für den Betrieb großer Werkzeuge aufbereitet werden. Die bei großen Schmiermittelkanalquerschnitten mögliche, direkte Öleinspeisung auf erfindungsgemäße Weise, reduziert jedoch die Baugröße der Vorrichtung 10.

Die Vorrichtung 10 zeichnet sich daher durch zwei wesentliche Vorteile aus. Zur Steuerung einer ausreichenden Schmierung ist abgesehen vom Einschalten beziehungsweise Ausschalten der Vorrichtung 10 kein Steuereingriff notwendig. Über die Steuerung eines ausreichenden Vorratsdruckes im Ölnebel- und Ölbehälter 23 sowie durch die Steuerung der Ölzufuhr über das Pumpenpaar P1 und P2 beziehungsweise die Pumpe P3 wird automatisch und unabhängig vom Werkzeugdurchmesser ausreichend Schmierstoff zugeführt. Eine mögliche fehlerhafte Programmierung, wie sie im Stand der Technik vorkommt, ist von daher ausgeschlossen. Zudem kommt die Vorrichtung 10 gegenüber dem Stand der Technik mit nur zwei Öl-Luftgemischerzeugern aus, was die Herstellung einer derartigen Vorrichtung 10 kostengünstiger macht.

Als zweiter wesentlicher Vorteil bleibt festzuhalten, dass Aufbau und Funktion der Vorrichtung 10 so ausgestaltet ist, dass bewährte Standardkomponenten Verwendung finden. Der gewählte Betriebsdruck von bis zu 4,1 bar ermöglicht es, die standardmäßigen 6-bar-Druckluftanschlüsse weiter zu nutzen. Allein um bereits bewährte und zuverlässige Komponenten verwenden zu können, weist die Vorrichtung 10 die beiden Pumpen P1 und P2 sowie die bei beiden Öl-Luftgemischerzeuger 14 und 15 auf, die grundsätzlich parallel betrieben werden. Auch bei der Pumpe P3 handelt es sich um ein mit den Pumpen P1 und P2 identisches Modell. Dies sichert neben einer hohen Zuverlässigkeit im laufenden Betrieb auch eine günstige Ersatzteilversorgung. Soweit es sinnvoll erscheint, ist es jedoch selbstverständlich denkbar, anstelle des Parallelbetriebes der Pumpen P1 und P2 sowie der ÖI-Luftgemischerzeuger 14 und 15 jeweils speziell für einen Anwendungsfall konzipierte Geräte zu verwenden.

Darüber hinaus sind aufgrund des Vorratsdruckes von bis zu P₄ = 4,1 bar auch keinerlei Anpassungen an den Werkzeugen erforderlich. Auch hier können weiterhin Standardwerkzeuge mit üblich ausgestalteten Schmiermittelkanälen verwendet werden. Die erfindungsgemäße Vorrichtung 10 kann also in bestehenden Anlagen problemlos gegen Vorrichtungen des Standes der Technik ausgetauscht werden.

Die Vorrichtung und das Verfahren zur Bereitstellung eines feinen Ölnebels, insbesondere zur Einspeisung in Schmierstoffkanäle von Werkzeugen einer CNC-Werkzeugmaschine zeichnet sich - kurz zusammengefasst - im wesentlichen durch folgende wesentliche Besonderheiten und Vorteile aus:

Die Vorrichtung wird allein mittels der standardisierten Maschinenbefehle M08 ("Kühlschmiermittel EIN") und M09 ("Kühlschmiermittel AUS") ein- bzw. ausgeschaltet.

Die Steuerung bzw. Regelung der Aerosolversorgung der Werkzeuge läuft sodann vollautomatisch ab. Es handelt sich um eine einfache Regelung durch Druckwerte des Aerosols im Unterschied zu bekannten Mengenregelungen.

Beim Anlaufen der Vorrichtung oder nach einem Werkzeugwechsel laufen alle Aerosolpumpen, bei Werkzeugen mit großquerschnittigen Kühl-Schmiermittelbohrungen einschließlich einer Überfettungspumpe.

Wenigstens eine Aerosolpumpe arbeitet im Regelbetrieb innerhalb eines Vorratsdruckbereichs. Bei Überschreiten des oberen Druckwertes des Vorratsdruckbereichs schaltet/n die Pumpe(n) ab, bis der Aerosolvorrat aufgebraucht ist und schaltet/n wieder zu, wenn der untere Druckwert des Vorratsdruckbereichs aufgrund des Aerosolverbrauchs unterschritten wird.

Abschließend soll die nachfolgende tabellarische Übersicht eine beispielhafte Zusammenfassung der beim Betrieb der erfindungsgemäßen Vorrichtung zw. bei Ausübung des Verfahrens entsprechend der Erfindung auftretenden Vorgänge wiedergeben:

**Übersicht über die Betriebsvorgänge und Schaltpunkte der Steuerung**

| Bezeichnung des Druckwertes P | P₀ | P₁ | P₂ | P₃ | P₄ |
|---|---|---|---|---|---|
| Benennung des Druckwertes in der Anmeldung | | vierter | erster | dritter | zweiter |
| Druck in bar | 0 | 1,6 | 1,8 | 3,8 | 4,1 |
| | | | | | |
| Bei Start der Anlage (Maschinenbefehl M08) | alle Pumpen ein | | | | |
| | | | | | |
| Regelbetrieb der Anlage: | | | | | |
| | | | | | |
| Betrieb mit Werkzeug mit großen Kühlquerschnitten | | | | | |
| Aktion bei Überschreiten des betr. Druckwertes: | | | Pumpe P3 aus | | |
| Aktion bei Unterschreiten des betr. Druckwertes: | | Pumpe P3 wieder ein | | | |
| | | | | | |
| Betrieb mit Werkzeug mit kleinen Kühlquerschnitten | | | | | |
| Aktion bei Überschreiten des betr. Druckwertes: | | | Pumpe P3 aus | | Pumpen P1 und P2 aus |
| Aktion bei Unterschreiten des betr. Druckwertes: | | | | Pumpen P1 und P2 wieder ein | |
| | | | | | |
| Bei Stopp der Anlage (Maschinenbefehl M09) | alle Pumpen aus | | | | |
| | | | | | |
| | | | | | |
| Werkzeug mit großquerschnittigen Kühlschmiermittel-Kanälen | | | | | |
| Gerät startet: alle Pumpen P1-P3 schalten ein - Vorratsdruck Im Behälter P₀ = 0 bar | | | | | |
| Vorratsdruck steigt über P₂ = 1,8 bar => Überfettungsumpe P3 schaltet ab | | | | | |
| Vorratsdruck sinkt während der Bearbeitung unter P₁ = 1,6 bar => Überfettungsumpe P3 schaltet wieder ein. | | | | | |
| Vorratsdruck steigt wieder über P₂ = 1,8 bar an => Überfottungsumpe P3 schaltet wieder ab. | | | | | |
| | | | | | |
| Werkzeug mit kleinguerschnittigen Kühlschmiermittel-Kanälen | | | | | |
| Gerät startet: alle Pumpen P1-P3 schalten ein - Vorratsdruck im Behälter P₀ = 0 bar | | | | | |
| Vorratsdruck steigt im Behälter an => über P₂ = 1,8 bar => Überfettungsumpe P3 schaltet ab | | | | | |
| Vorratsdruck steigt weiter über P₄ = 4,1 bar an => Pumpen P1+P2 schalten ab | | | | | |
| Vorratsdruck fällt während der Bearbeitung unter P₃ = 3,8 bar ab => Pumpen P1+P2 schalten wieder ein. | | | | | |
| Gerät wird abgeschaltet: Vorratsdruck sinkt auf P₀ = 0 bar | | | | | |

## Patentansprüche

1. Vorrichtung (10) zur Bereitstellung eines feinen Ölnebels, insbesondere zur Einspeisung in Schmierstoffkanäle von Werkzeugen einer CNC-Werkzeugmaschine, mit Pumpen (P1, P2, P3) zur Ölförderung und zumindest einer Druckluftleitung (16, 28), über die Luft gefördert wird, sowie wenigstens einem Öl-Luftgemischerzeuger (14, 15), der Öl und Luft zu einem feinen Ölnebel, nachstehend Aerosol genannt, aufbereitet und einem Vorratsbehälter (23) zuführt, aus dem der Ölnebel über eine Zuleitung (26) dem Werkzeug zugeführt wird, **dadurch gekennzeichnet, dass** die Vorrichtung (10) einen den Druck des Aerosols im Vorratsbehälter (23), nachstehend Vorratsdruck genannt, messenden Drucksensor (34) und eine Steuereinrichtung (31) aufweist, die nach dem Einschalten der Vorrichtung (10) Luftzufuhr und je mindestens eine Aerosolpumpe (P1, P2) und eine Überfettungspumpe (P3) zur Öl-Luftgemischerzeugung startet und dass die Steuervorrichtung ferner
- die Überfettungspumpe (P3) bei Erreichen eines vorbestimmten ersten Vorratsdruckwertes P₂ stoppt,
- die mindestens eine Aerosolpumpe (P1, P2) bei Überschreiten eines vorbestimmten, maximal zulässigen zweiten Vorratsdruckwertes P₄ stoppt,
- die mindestens eine Aerosolpumpe (P1, P2) bei Unterschreiten eines vorbestimmten dritten Vorratsdruckwertes P₃ erneut startet, und
- die Überfettungspumpe (P3) bei Unterschreiten eines vorbestimmten vierten Vorratsdruckwertes P₁ erneut startet,
wobei P₁ < P₂ < P₃ < P₄ ist.

2. Vorrichtung nach Anspruch 1, **dadurch gekennzeichnet, dass** die Vorrichtung (10) über eine Steuerleitung (36) mittels des standardisierten Maschinenbefehls M08, d. h. Kühlschmiermittel EIN, eingeschaltet und mittels des standardisierten Maschinenbefehls M09, d. h. Kühlschmiermittel AUS, ausgeschaltet wird.

3. Vorrichtung nach Anspruch 1 oder 2, **dadurch gekennzeichnet, dass** bei einer Druckluft- bzw. Aerosoleinspeisung mit etwa 6 bar in den Vorratsbehälter (23) die Vorratsdruckwerte P₁ bei etwa 1,6 bar, P₂ bei etwa 1,8 bar, P₃ bei etwa 3,8 bar und P₄ bei etwa 4,1 bar liegen.

4. Vorrichtung nach Anspruch 1, **dadurch gekennzeichnet, dass** zur Öl-Luftgemischerzeugung zwei parallel betriebene Öl-Luftgemischerzeuger (14, 15) vorgesehen sind, denen jeweils eine eigene Ölförderpumpe (P1, P2) zugeordnet ist.

5. Vorrichtung nach Anspruch 1, **dadurch gekennzeichnet, dass** die Überfettungspumpe (P3) über eine Leitung (25) direkt mit der Zuleitung (26) zum Werkzeug verbunden ist, und dass eine zusätzliche Druckluftleitung (28) zur Förderung von Zusatzluft mit wenigstens einem Öl-Luftgemischerzeuger (14, 15) verbunden ist, wobei Zusatzlufteinspeisung und Überfettungspumpe (P3) bei Erreichen des ersten Vorratsdruckwertes P₂ durch die Steuereinrichtung (31) abschalten.

6. Vorrichtung nach einem der vorherigen Ansprüche, **dadurch gekennzeichnet, dass** die Pumpen (P1, P2) und die Überfettungspumpe (P3) als Pneumatikpumpen ausgestaltet sind, die - mit den jeweiligen Druckluftleitungen (16, 28) verbunden - durch das Einspeisen von Luft beziehungsweise Zusatzluft betrieben werden.

7. Vorrichtung nach Anspruch 6, **dadurch gekennzeichnet, dass** die Pumpenleistung über Frequenzgeneratoren (29, 30) geregelt ist.

8. Verfahren zur Bereitstellung eines feinen Ölnebels, insbesondere zur Einspeisung in Schmierstoffkanäle von Werkzeugen einer CNC-Werkzeugmaschine, bei dem Öl-Luftgemischerzeugern (14, 15) Druckluft und Öl über Pumpen (P1, P2, P3) zur Erzeugung eines feinen Ölnebels, nachstehend Aerosol genannt, zugeführt wird, wobei die Pumpen (P1, P2, P3) und die Druckluftzufuhr in Abhängigkeit von den verwendeten Werkzeugen zugeschaltet werden, **dadurch gekennzeichnet, dass** der Aerosoldruck, nachstehend Vorratsdruck genannt, erfasst wird und die Öl-Luftgemischerzeuger (14, 15) nach Einschalten der Vorrichtung (10) in Abhängigkeit allein von voreingestellten Vorratsdruckwerten (P₁, P₂, P₃, P₄) angesteuert werden.

9. Verfahren nach Anspruch 8, **dadurch gekennzeichnet, dass** der standardisierte Maschinenbefehl M08, d. h. Kühlschmiermittel EIN, die Vorrichtung (10) einschaltet und der standardisierte Maschinenbefehl M09, d. h. Kühlschmiermittel AUS, die Vorrichtung (10) ausschaltet.

10. Verfahren nach Anspruch 8, **dadurch gekennzeichnet, dass** die für die Aerosolerzeugung zuständigen Pumpen (P1, P2) im Regelbetrieb innerhalb eines Vorratsdruckbereichs zwischen P₀ = 0 bar und P₄ < 6 bar kontinuierlich arbeiten.

11. Verfahren nach Anspruch 8, **dadurch gekennzeichnet, dass** die Steuereinrichtung (31) im Regelbetrieb bei Unterschreiten eines Vorratsdruckwertes P₁ eine Überfettungspumpe (P3) zuschaltet und Zusatzluft in wenigstens einen der ÖI-Luftgemischerzeuger (14, 15) einspeist.

12. Verfahren nach einem Ansprüche 8 bis 11, **dadurch gekennzeichnet, dass** bei einer Druckluft- bzw. Aerosoleinspeisung mit etwa 6 bar in den Vorratsbehälter (23) die Vorratsdruckwerte P₁ bei etwa 1,6 bar, P₂ bei etwa 1,8 bar, P₃ bei etwa 3,8 bar und P₄ bei etwa 4,1 bar liegen.

## Claims

1. Apparatus (10) for providing a fine oil mist, in particular for feeding into lubricant ducts of tools of a CNC machine tool, having pumps (P1, P2, P3) for the conveyance of oil and at least one compressed air line (16, 28), via which air is conveyed, and having at least one oil-air mix generator (14, 15), which processes oil and air into a fine oil mist, hereinafter referred to as an aerosol, and feeds it to a reservoir (23) from which the oil mist is fed to the tool via a supply line (26), **characterized in that** the apparatus (10) has a pressure sensor (34) which measures the pressure of the aerosol in the reservoir (23), hereinafter referred to as the supply pressure, and has a control unit (31) which, after the apparatus (10) has been turned on, starts up the supply of air and, respectively, at least one aerosol pump (P1, P2) and an over-enriching pump (P3) for the oil-air mix generation, and **in that** the control apparatus further
- stops the over-enriching pump (P3) when a predetermined first supply pressure value P₂ is reached,
- stops the at least one aerosol pump (P1, P2) when a predetermined, maximally permitted second supply pressure value P₄ is exceeded,
- restarts the at least one aerosol pump (P1, P2) when a predetermined third supply pressure value P₃ is fallen below, and
- restarts the over-enriching pump (P3) when a predetermined fourth supply pressure value P₁ is fallen below,
wherein P₁ < P₂ < P₃ < P₄.

2. Apparatus according to Claim 1, **characterized in that** the apparatus (10) is turned on via a control line (36) by means of the standardized machine command M08, i.e. cooling lubricant ON, and is turned off by means of the standardized machine command M09, i.e. cooling lubricant OFF.

3. Apparatus according to Claim 1 or 2, **characterized in that**, when compressed air or aerosol is fed into the reservoir (23) at about 6 bar, the supply pressure values P₁ approximate to 1.6 bar, P₂ to 1.8 bar, P₃ to 3.8 bar and P₄ to 4.1 bar.

4. Apparatus according to Claim 1, **characterized in that**, for the oil-air mix generation, two parallel-operated oil-air mix generators (14, 15) are provided, to which an own oil feed pump (P1, P2) is respectively assigned.

5. Apparatus according to Claim 1, **characterized in that** the over-enriching pump (P3) is connected by a line (25) directly to the supply line (26) to the tool, and **in that** an additional compressed air line (28) for the conveyance of supplementary air is connected to at least one oil-air mix generator (14, 15), the supplementary air feed and the over-enriching pump (P3) being turned off by the control unit (31) when the first supply pressure value P₂ is reached.

6. Apparatus according to one of the previous claims, **characterized in that** the pumps (P1, P2) and the over-enriching pump (P3) are configured as pneumatic pumps, which - connected to the respective compressed air lines (16, 28) - are operated by the feeding of air or supplementary air.

7. Apparatus according to Claim 6, **characterized in that** the pumping output is controlled via frequency generators (29, 30).

8. Method for providing a fine oil mist, in particular for feeding into lubricant ducts of tools of a CNC machine tool, in which oil-air mix generators (14, 15) are fed compressed air and oil via pumps (P1, P2, P3) for the generation of a fine oil mist, hereinafter referred to as an aerosol, the pumps (P1, P2, P3) and the compressed air supply being switched on as a function of the tools used, **characterized in that** the aerosol pressure, hereinafter referred to as the supply pressure, is recorded and the oil-air mix generators (14, 15), after the apparatus (10) has been turned on, is activated as a function solely of preset supply pressure values (P₁, P₂, P₃, P₄).

9. Method according to Claim 8, **characterized in that** the standardized machine command M08, i.e. cooling lubricant ON, turns on the apparatus (10) and the standardized machine command M09, i.e. cooling lubricant OFF, turns off the apparatus (10).

10. Method according to Claim 8, **characterized in that** the pumps (P1, P2) responsible for the aerosol generation, during controlled operation, operate continuously within a supply pressure range between P₀ = 0 bar and P₄ < 6 bar.

11. Method according to Claim 8, **characterized in that** the control unit (31) during controlled operation, when a supply pressure value P₁ is fallen below, switches on an over-enriching pump (P3) and feeds supplementary air into at least one of the oil-air mix generators (14, 15).

12. Method according to one of Claims 8 to 11, **characterized in that**, in the case of a compressed air or aerosol feed into the reservoir (23) at about 6 bar, the supply pressure values P₁ approximate to 1.6 bar, P₂ to 1.8 bar, P₃ to 3.8 bar and P₄ to 4.1 bar.

## Revendications

1. Dispositif (10) pour fournir un fin brouillard d'huile, notamment pour l'injection dans des canaux de lubrifiant d'outils d'une machine-outil à commande numérique, comprenant des pompes (P1, P2, P3) pour refouler l'huile et au moins une conduite d'air comprimé (16, 28) par le biais de laquelle l'air est transporté, ainsi qu'au moins un générateur de mélange air-huile (14, 15), qui prépare l'huile et l'air pour former un fin brouillard d'huile, ci-après appelé aérosol, et qui l'achemine à un réservoir (23), duquel le brouillard d'huile est acheminé à l'outil par le biais d'une conduite d'amenée (26), **caractérisé en ce que** le dispositif (10) présente un capteur de pression (34) mesurant la pression de l'aérosol dans le réservoir (23), ci-après appelée la pression de réserve, et un dispositif de commande (31), qui, après le branchement du dispositif (10), amorce l'apport d'air et démarre à chaque fois au moins une pompe d'aérosol (P1, P2) et une pompe d'enrichissement (P3) pour produire le mélange air-huile et **en ce que** de plus, le dispositif de commande
- arrête la pompe d'enrichissement (P3) dès qu'une valeur de pression de réserve P₂ a été dépassée,
- arrête l'au moins une pompe d'aérosol (P1, P2) en cas de dépassement d'une deuxième valeur de pression de réserve prédéterminée maximale admissible P₄,
- redémarre l'au moins une pompe d'aérosol (P1, P2) en dessous d'une troisième valeur de pression de réserve prédéterminée P₃, et
- redémarre la pompe d'enrichissement (P3) en dessous d'une quatrième valeur de pression de réserve prédéterminée P₁,
avec P₁ < P₂ < P₃ < P₄.

2. Dispositif selon la revendication 1, **caractérisé en ce que** le dispositif (10) est branché par le biais d'une conduite de commande (36) au moyen de l'ordre de machine standardisé M08, c'est-à-dire APPORT lubrifiant de refroidissement, et est débranché au moyen de l'ordre de machine standardisé M09, c'est-à-dire ARRET lubrifiant de refroidissement.

3. Dispositif selon la revendication 1 ou 2, **caractérisé en ce que** pour une injection d'air comprimé ou d'aérosol, avec environ 6 bars dans le réservoir (23), les valeurs de pression de réserve P₁ sont à environ 1,6 bars, P₂ à environ 1,8 bars, P₃ à environ 3,8 bars et P₄ à environ 4,1 bars.

4. Dispositif selon la revendication 1, **caractérisé en ce que** l'on prévoit pour la production du mélange air-huile, deux générateurs de mélange air-huile (14, 15) fonctionnant en parallèle, auxquels est associée à chaque fois une pompe de refoulement d'huile propre (P1, P2).

5. Dispositif selon la revendication 1, **caractérisé en ce que** la pompe d'enrichissement (P3) est directement connectée à la conduite d'amenée (26) à l'outil par le biais d'une conduite (25), et **en ce qu'**une conduite d'air comprimé supplémentaire (28) pour transporter l'air supplémentaire est connectée à au moins un générateur de mélange air-huile (14, 15), l'injection d'air supplémentaire et la pompe d'enrichissement (P3) étant coupées par le dispositif de commande (31) dès que la première valeur de pression de réserve P₂ est atteinte.

6. Dispositif selon l'une quelconque des revendications précédentes, **caractérisé en ce que** les pompes (P1, P2) et la pompe d'enrichissement (P3) sont réalisées sous forme de pompes pneumatiques, qui, connectées aux conduites d'air comprimé respectives (16, 28), sont entraînées par l'injection d'air ou d'air supplémentaire.

7. Dispositif selon la revendication 6, **caractérisé en ce que** la puissance de la pompe est régulée par des générateurs de fréquence (29, 30).

8. Procédé pour fournir un fin brouillard d'huile, notamment pour l'injection dans des canaux de lubrifiant d'outils d'une machine-outil à commande numérique, dans lequel des générateurs de mélange air-huile (14, 15) reçoivent de l'air comprimé et de l'huile par le biais de pompes (P1, P2, P3) pour produire un fin brouillard d'huile, ci-après appelé aérosol, les pompes (P1, P2, P3) et l'apport d'air comprimé étant amorcés en fonction des outils utilisés, **caractérisé en ce que** la pression d'aérosol, ci-après appelée pression de réserve, est détectée et les générateurs de mélange air-huile (14, 15) sont commandés après le branchement du dispositif (10) en fonction uniquement des valeurs de pression de réserve préétablies (P₁, P₂, P₃, P₄).

9. Procédé selon la revendication 8, **caractérisé en ce que** l'ordre de machine standardisé M08, c'est-à-dire APPORT lubrifiant de refroidissement, branche le dispositif (10) et l'ordre de machine standardisé M09, c'est-à-dire ARRET lubrifiant de refroidissement, débranche le dispositif (10).

10. Procédé selon la revendication 8, **caractérisé en ce que** les pompes (P1, P2) disponibles pour la production d'aérosol fonctionnent en mode de réglage de manière continue à l'intérieur d'une plage de pression de réserve entre P₀ = 0 bar et P₄ < 6 bars.

11. Procédé selon la revendication 8, **caractérisé en ce que** le dispositif de commande (31) démarre une pompe d'enrichissement (P3) en mode de réglage en dessous d'une valeur de pression de réserve P₁ et injecte de l'air supplémentaire dans au moins l'un des générateurs de mélange air-huile (14, 15).

12. Procédé selon l'une quelconque des revendications 8 à 11, **caractérisé en ce que** pour une injection d'air comprimé ou d'aérosol avec une pression d'environ 6 bars dans le réservoir (23), les valeurs de pression de réserve P₁ se situent à environ 1,6 bars, P₂ à environ 1,8 bars, P₃ à environ 3,8 bars et P₄ à environ 4,1 bars.
